# EUROPEAN PATENT SPECIFICATION

(11) **EP 2 116 419 B1**
(45) Date of publication and mention of the grant of the patent: **05.04.2017**
(21) Application number: 09380094.4
(22) Date of filing: 06.05.2009
(51) Int. Cl.: B60P 3/12

(54) **Crane vehicle**
Kranfahrzeug
Véhicule de grue

(30) Priority: 06.05.2008 ES 200801293
(43) Date of publication of application: 11.11.2009
(73) Proprietor: Rubio Terente, Jesús Aurelio, 33600 Mieres del Camino Asturias (ES)
(72) Inventor: Rubio Terente, Jesús Aurelio, 33600 Mieres del Camino Asturias (ES)
(74) Representative: Ungria López, Javier

(56) References cited:
- WO-A-2006/031498
- WO-A-2006/121417
- DE-A1- 2 821 436
- US-A- 3 773 198
- US-A- 4 473 334

## Description

### OBJECT OF THE INVENTION

As stated in the title of this descriptive specification, the present invention relates to a crane vehicle intended in principle as its name suggests for the transportation and towing away of other vehicles which normally are broken down, though it can also be used for towing away vehicles that are not broken down.

The crane of the invention is evidently also intended for the transportation of vehicles for other reasons, such as for example being badly parked.

In any case, the crane vehicle comprises a novel structure that permits the transportation of a vehicle on a fixed platform and also permits the simultaneous towing or not of a second vehicle by means of a telescopic device provided in the rear part and associated with a characteristic tilting head.

### BACKGROUND OF THE INVENTION

There currently exist different types of crane vehicles, the majority of which incorporate a mobile platform which can adopt an inclined position in order to be able to locate a vehicle, broken down or otherwise, on said platform by hauling with a cable which pulls the vehicle by means of a hydraulic device or similar incorporated into the crane itself, in such a way that once the vehicle has been located on the platform, which is in the inclined position, said mobile platform is then located in a horizontal rest position. Examples of this are disclosed in DE2821436 and WO2006/121427.

Other cranes incorporate a mechanism in their rear part permitting the broken-down vehicle to be towed by keeping the front wheels resting on an elevated support forming part of said mechanism, with which the broken-down vehicle will rest on the ground via its rear wheels during its transportation.

Other cranes of greater size incorporate a lower platform and another elevated platform. In this case, the system of functioning is basically as in the first case, so that in order to transport two cars, a first car is first located on the upper platform which is arranged in a temporary lowered position on an inclined plane so that the vehicle can be located on it, and then it is raised to its upper horizontal position.

Next, a second vehicle is placed on the lower platform in basically the same way as with the upper platform.

This type of crane presents problems of stability during transportation, with the dangers that this entails, due above all to the high relative height at which the broken-down vehicle is located on the upper platform.

Another drawback refers to the laborious and lengthy process for raising the broken-down vehicle on the upper platform and also for lowering it.

There also exists a kind of crane truck essentially for transporting large and heavier vehicles, such a buses, trucks, etc., which incorporates a tilting head that occupies the entire space above the platform of the said crane truck, and at the same time this head includes in its rear part a telescopic and tilting arm with an end support where the front wheels of the vehicle to be transported will rest, with the rear wheels resting on the ground.

### DESCRIPTION OF THE INVENTION

With the aim of achieving the objectives and avoiding the drawbacks mentioned in the above sections, the invention proposes a crane vehicle characterized in that it comprises the combination of means for transporting a first vehicle on a horizontal fixed platform and means for transporting a second vehicle by towing which will rest on the ground via its rear wheels, with the front part of this second vehicle being kept elevated during transportation.

The means for transporting the first vehicle incorporate a characteristic tilting platform which is hinged at the rear edge of the horizontal fixed platform, in such a way that the tilting platform will be able to adopt an inclined position so that the broken-down vehicle can be raised and located on said horizontal fixed platform, either by its own means or with the aid of a traction cable incorporated into the crane itself.

The means for transporting the second vehicle by towing consist of a tilting head and a telescopic arm coupled in jointed fashion in the rear part of the head below the linkage of the tilting platform, said head being located above the chassis at the same level as the horizontal platform. The arm is also tilting where it starts, and at the same time the free end of said telescopic arm incorporates an adjustable support where the front or rear wheels of the vehicle will rest, the vehicle resting on the ground via its rear or front wheels, respectively.

Therefore, the head and the telescopic arm can tilt upwards and downwards in order to facilitate the collection, transportation and depositing of the corresponding vehicle.

Another important characteristic of the invention is that the tilting platform is extendable thanks to some lateral guides.

To achieve this, said platform incorporates a main body connected in jointed fashion to the horizontal fixed platform and a second body with linear displacement which is guided in the lateral guides of the main body.

Moreover, the tilting platform incorporates in its jointed connection a large clearance gap in order to span a robust support where the telescopic arm assembly is connected, this support being made to be integral with the head.

The movements of the different mobile bodies will preferably be carried out by means of oleo-hydraulic cylinders, though these power elements could also be others.

With this arrangement that is described, in order to raise a car onto the horizontal fixed platform, the tilting ramp will be located in a lowered position and opened out in an inclined plane in which the lower edge of the mobile body of the ramp will rest on the ground in order to facilitate the raising of the vehicle as far its being located on the fixed platform.

In order to carry out this operation, the telescopic arm will first be placed in a withdrawn rest position beneath the ramp in which the end support of the telescopic arm will be in contact with the ground or very close to it. In this position, the vehicle will be located on the horizontal fixed platform.

Next, the tilting platform will be withdrawn until it is located in a vertical or horizontal plane.

In a later phase, a second vehicle will be collected by supporting its front wheels on the end support of the telescopic arm, moving the head and the telescopic arm until the most appropriate required position is reached for carrying out the transportation safely.

The crane vehicle presents great robustness with a double rear axle, with an appropriate load distribution being achieved that maintains good stability both during the loading of a single car and during that of two.

Below, in order to facilitate a better understanding of this descriptive specification and forming an integral part thereof, some figures are attached in which the object of the invention has been represented by way of illustration and non-limiting.

### BRIEF DESCRIPTION OF THE DRAWINGS

**Figure 1****.-** Shows a perspective view of the crane vehicle, the object of the invention. It is intended for being able to transport a vehicle on a horizontal fixed platform and a second vehicle by towing which will rest on the ground via its rear wheels.

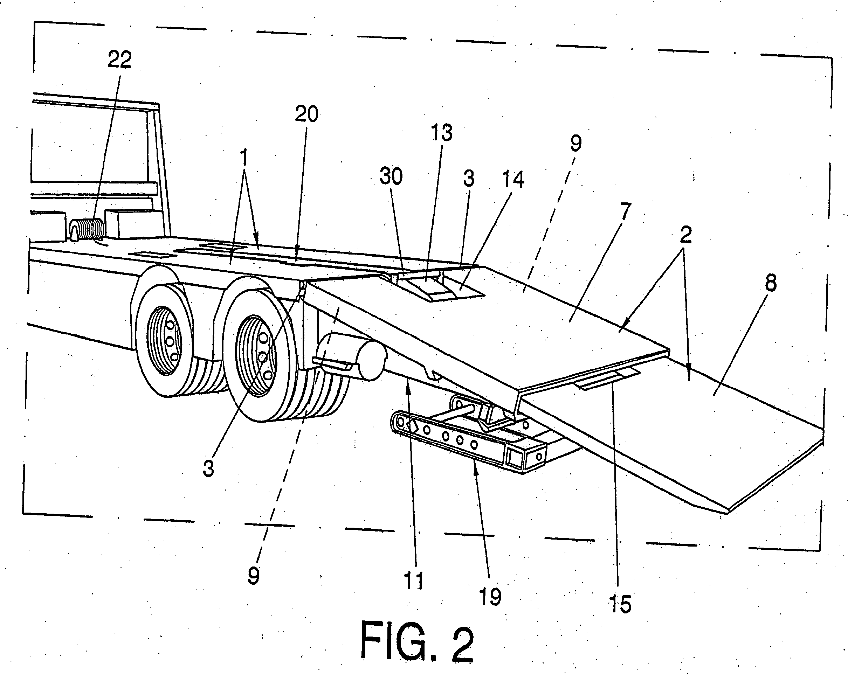

**Figure 2****.-** Represents another perspective view essentially showing a characteristic ramp defined by a tilting platform, via which the vehicle will be able to raised onto the fixed platform.

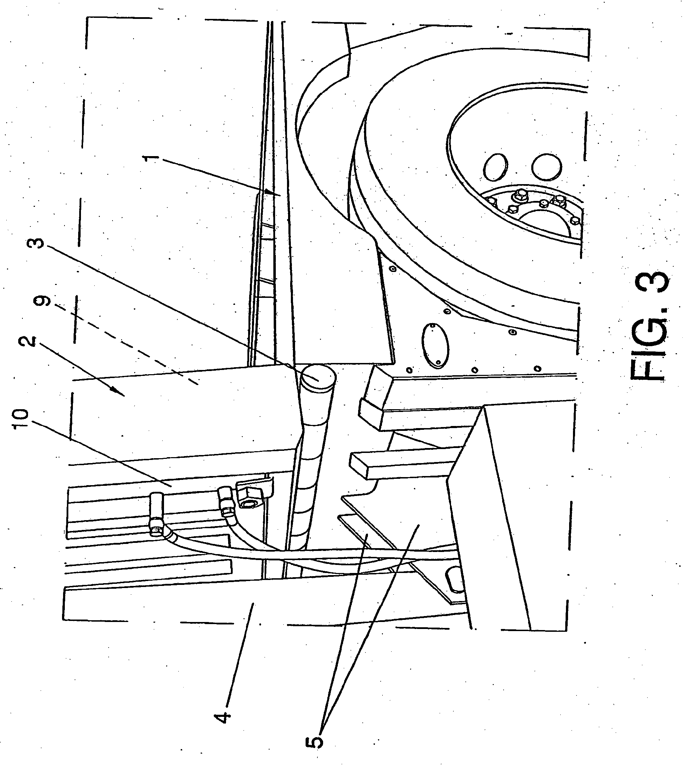

**Figure 3****.-** Shows a detailed view of the linkage and means of tilting of the tilting platform. It also shows some means for lengthening the said platform which is extendable.

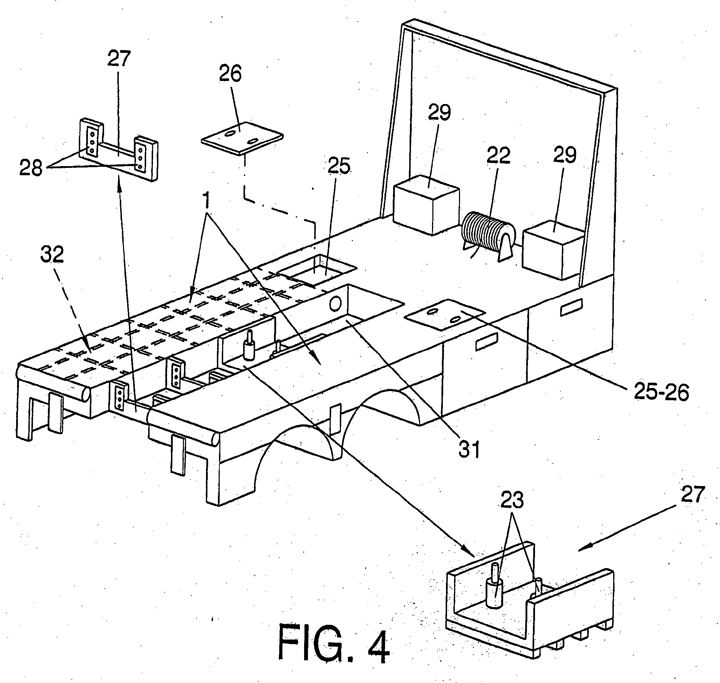

**Figure 4****.-** Represents a perspective view essentially showing the structure of the horizontal fixed platform which incorporates a centered space where a characteristic tilting head will be housed, which in the folded position remains flush with the free surface of that fixed platform.

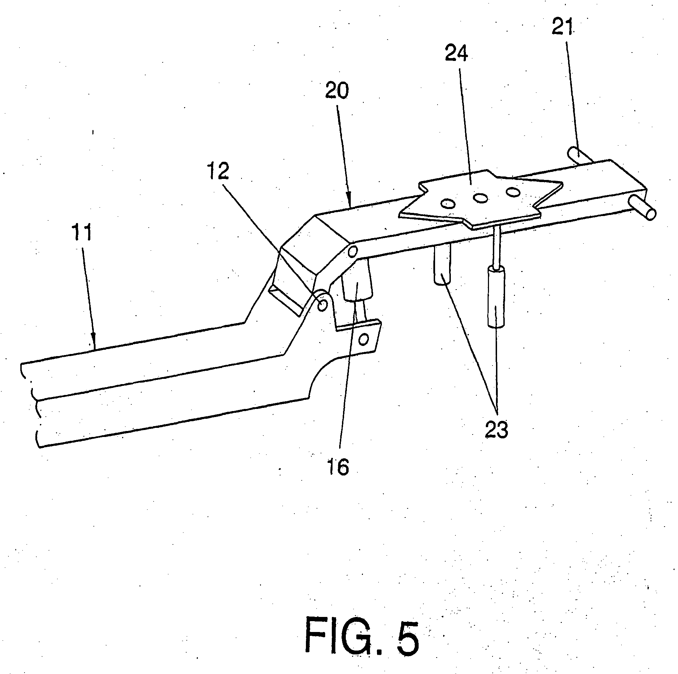

**Figure 5****.-** Represents a perspective view essentially showing the tilting head mentioned in the previous figure.

### DESCRIPTION OF THE Preferred FORM OF EMBODIMENT

Considering the numbering adopted in the figures, the crane vehicle comprises in principle a robust truck-type vehicle, with double axle in its rear part, consisting of a horizontal fixed platform 1 for being able to transport a first vehicle which will be able to be located on said fixed platform 1 thanks to a ramp defined by a characteristic tilting and extendable platform 2 coupled in jointed fashion to a pair of transverse shafts 3 located in the same direction in correspondence with the rear edge of the horizontal fixed platform 1.

The tilting of the ramp 2 is carried out by means of a pair of oleo-hydraulic cylinders 4 coupled in pairs of lugs 5 integral with the chassis of the vehicle or truck, and at the same time the rods of those cylinders 5 are connected to a transverse bar 6 integral with the tilting platform 2.

This platform comprises a main base body 7 connected to the linkage shaft 3 and a second mobile body 8 of the platform displaceable along some lateral guides 9 of said main body 7, to which the said transverse bar 6 is integral. The displacement of this mobile body 8 is carried out by means of another pair of cylinders 10 connected to the sides of the main body 7 and whose rods are connected to the main body 8.

Thanks to the oleo-hydraulic cylinders 4, the required inclination is achieved of the ramp 2 for raising the corresponding vehicle on the fixed platform, said cylinders evidently also being used for locating the said ramp in the appropriate position at each moment. The angle of inclination of the ramp 2 can also change depending on the position of the mobile body 8 which is displaceable by means of the cylinders 10.

The crane vehicle also incorporates a characteristic and elongated centered tilting head 20 which is linked to a forward shaft 21 associated with the chassis of the crane vehicle, this head being incorporated into the fixed platform 1 in such a way that when the said tilting head 20 is in the withdrawn rest position it is flush with the said fixed platform 1. The latter basically comprises two lateral areas flanking the head 20 and a forward front area where a winch 22 is to be found.

The head 20 tilts by means of a pair of oleo-hydraulic cylinders 23 coupled to the chassis in correspondence with the double axle of the rear wheels of the vehicle, its rods being connected on some extensions forming part of a plate 24 screwed or welded to the said tilting head 20.

The latter reaches as far as the rear part of the chassis, the rear end of the said head 20 including a robust support 13 where a telescopic arm 11 is coupled in jointed fashion facing backwards and coupled where it starts to a short shaft 12, in such a way that both bodies 7 and 8 of the ramp 2 include some facing clearance gaps 14 and 15 for spanning the centered robust support 13 when the ramp 2 tilts downwards to the appropriate inclined position for being able to raise the corresponding vehicle on the fixed platform 1. The tilting of the arm 11 is carried out by means of a short oleo-hydraulic cylinder 16, with the telescopic displacement of the said arm 11 being done with another oleo-hydraulic cylinder 17. The clearance gaps 14 and 15 also permit the free tilting of the elongated head 20.

Coupled in jointed fashion in the end section of the telescopic arm 11, by means of a short vertical shaft 18, is an adjustable support 19 where the front wheels of a second vehicle will sit, this vehicle resting on the ground via its rear wheels during transportation.

With this arrangement that is described, the crane of the invention can transport a single vehicle, either on the horizontal fixed platform 1 or on the end support 19 of the telescopic arm 11, or it can also transport two vehicles: one on the fixed platform 1 and the other obviously on said end support 19 of the telescopic arm 11.

In either case, in order to have a vehicle on the fixed platform 1 in the first place, the telescopic arm 11 will first be located in its folded position, and the ramp 2 will then be tilted and extended locating it in the appropriate inclined position with the rear edge of the extended mobile body 8 resting on the ground, with the telescopic arm 11 together with the adjustable support 19 remaining beneath the ramp 2.

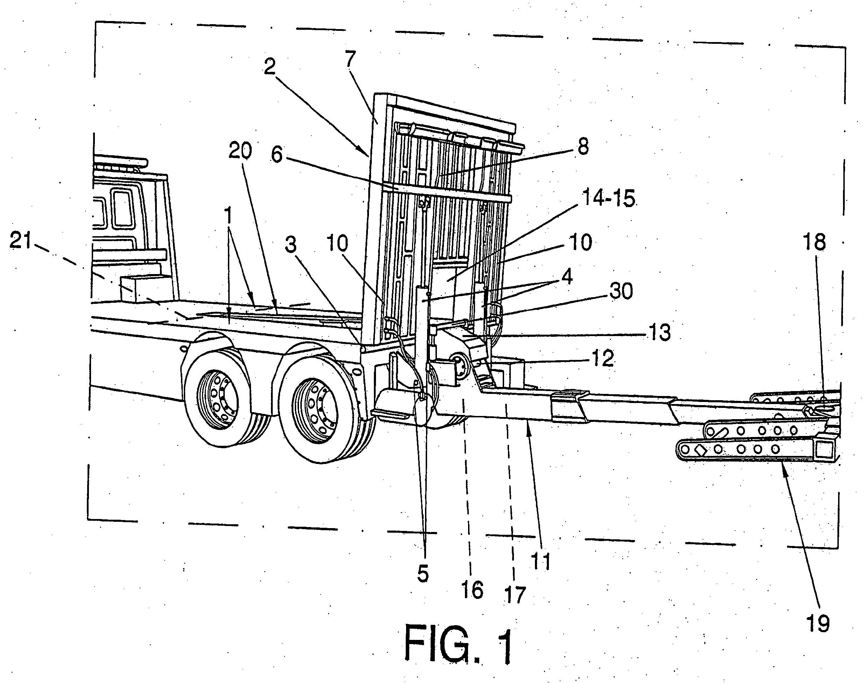

Once the first vehicle is on the fixed platform 1, the said ramp 2 is then withdrawn to its folded position until it is located in an elevated and vertical position that is completely stable, as shown in figure 1.

Next, the tilting head 20, telescopic arm 11 and adjustable support 19 will be proceeded with, locating the last of these in an appropriate position for being able to locate the front wheels of a second vehicle on the adjustable support 19 with the latter resting on the ground. Next, the said arm 11 will be withdrawn and raised in order to keep the support 19 and the front part of this second vehicle in a raised position with respect to the ground. During this withdrawal operation, the head 20 will also be moved when necessary, particularly in order to position the telescopic arm 11 and maintain its horizontal direction.

The jointed coupling of the adjustable support 19 permits small turns in both directions which facilitate the transportation of the vehicle being towed and supported on that adjustable support 19.

The horizontal direction of the telescopic arm 11 permits a correct functioning of the turning of the adjustable support 19 during displacement of the crane when towing a vehicle resting on said adjustable support 19, the turns being carried out around the vertical shaft 18.

The front part of the lateral areas of the fixed platform 1 incorporate some housings 25 concealable by means of some covers 26 flush with the platform 1, in such a way that the front wheels of the respective vehicle raised on the crane can be arranged in those housings 25 thereby reducing its height, particularly in the case of large vehicles in order to be able to pass beneath certain bridges on roads and other routes which the crane travels along. The possibility also exists of incorporating other housings for the rear wheels of the vehicle also arranged on the fixed platform 1.

Moreover, the lateral surfaces of the fixed platform 1 are integral with some lower structures 32 which demarcate a longitudinal centered space 31, these lower structures 32 being connected to each other by means of various intermediate U-shaped supports 27 made of high-resistance steel which serve to hold both lower structures 32 firmly together, preventing said lower structures 32 along with their lateral areas from giving way under the weight when a vehicle is loaded onto the fixed platform 1. Moreover, said intermediate supports 27 also serve to guide the tilting head 20 during its movement and also for securing its folded rest position. Specifically on the rearmost intermediate support 27 some Teflon buffers 28 are secured in order to adjust the guiding of the head 20 at the end of its folding.

Provision has also been made for the possibility of incorporating some counterweights 29 arranged in front of the forwardmost part of the fixed platform 1 in order to counterbalance the weight of the loaded vehicle in the adjustable support 19.

The cylinders 23 that move the tilting head 20 can be connected directly to the chassis as referred to above or they can also preferably be coupled to one of the intermediate supports 27.

In the rear part of the fixed platform 1 there exists a loose roller 30 where the traction cable will be supported for raising the vehicle on the lower platform 1.

## Claims

1. **CRANE VEHICLE,** for transporting vehicles, it comprises:
a fixed platform (1) for locating a first vehicle thereon rotary connected to a tilting ramp (2); being said tilting ramp (2) extendable, for which said tilting ramp (2) has a main body (7) and a second body (8); and,
a telescopic arm (11) being connected to a tilting head (20) rotary coupled to the fixed platform; said tilting head (20) remains flush with said fixed platform (1) in a folded position; the telescopic arm (11) having a robust adjustable end support (19) where the front wheels of a second vehicle will sit for its transportation by towing and which will rest on the ground via its rear wheels;
**characterized in that** said main body (7) and said second body (8) of the tilting ramp (2) have centered and facing clearance gaps (14 and 15) in the folded position in order to span the rear part of the tilting head (20) when there exists relative movement between the tilting ramp (2) and the said tilting head (20).

2. **CRANE VEHICLE**, according to claim 1. **characterized in that** the tilting head (20) is housed in its folded position in a centered longitudinal space (31) flanked by two lower structures (32) integral to which are lateral surfaces forming part of the fixed platform (1).

3. **CRANE VEHICLE**, according to claim 2, **characterized in that** the lower structures (32) are made to be integral to each other by means of intermediate supports (27) made of high-resistance steel arranged in correspondence with the centered longitudinal space (31).

4. **CRANE VEHICLE**, according to claim 3, **characterized in that** the intermediate supports (27) form the seating for the tilting head (20) in its folded position.

5. **CRANE VEHICLE**, according to any of claims 3 or 4, **characterized in that** at least one of the intermediate supports (27) incorporates guide means for the head (20) during its final tilting towards the folded position.

6. **CRANE VEHICLE**, according to claim 5, **characterized in that** the guide means for the head (20) for the final tilting thereof towards the folded position consist of certain lateral Teflon bodies (28).

7. **CRANE VEHICLE**, according to any of the above claims, **characterized in that** the tilting head (20) is linked to a forward shaft arranged beneath the surface of the fixed platform (1).

8. **CRANE VEHICLE**, according to any of the above claims, **characterized in that** the tilting of the tilting head (20) is carried out by a pair of oleo-hydraulic cylinders (23) coupled in an intermediate zone corresponding to the double axle of the rear wheels of the crane vehicle, while the rods are connected to lateral extensions of a plate (24) integral with the tilting head (20).

9. **CRANE VEHICLE**, according to claim 8, **characterized in that** the oleo-hydraulic cylinders (23) which move the tilting head (20) are coupled to one of the intermediate supports (27).

10. **CRANE VEHICLE**, according to any of the above claims, **characterized in that** the telescopic arm (11) is coupled where it starts in jointed fashion to a robust centered support (13) integral with the rear part of the tilting head (20) beneath a linkage of the tilting ramp (2).

11. **CRANE VEHICLE**, according to any of the above claims, **characterized in that** the main body (7) is coupled in the transverse linkage shaft (3) and the second body (8) is linearly displaceable and coupled to lateral guides (9) of the main body (7).

12. **CRANE VEHICLE,** according to claim 11, **characterized in that** the tilting of the tilting ramp (2) is carried out by means of oleo-hydraulic cylinders (4) coupled in pairs of lugs (5) integral with the chassis of the crane and whose rods are connected in a transverse bar (6) integral with the sides of the main body (7) of the tilting ramp (2).

13. **CRANE VEHICLE,** according to any of claims 11 or 12, **characterized in that** the linearly displaceable body (8) of the tilting ramp (2) is moved by means of a pair of oleo-hydraulic cylinders (10) coupled to lateral zones of the main body (7) and whose rods are connected at other points of the said linearly displaceable body (8).

14. **CRANE VEHICLE,** according to any of claims 10 to 13, **characterized in that** the tilting-of the telescopic arm (11) is carried out by a short oleo-hydraulic cylinder (16) coupled in the rear part of the tilting head (20) beneath the central support (13) and whose rod is connected in an initial part of the telescopic arm (11).

15. **CRANE VEHICLE,** according to any of the above claims, **characterized in that** the linear displacement of the telescopic arm (11) is carried out by means of an oleo-hydraulic cylinder (17).

16. **CRANE VEHICLE,** according to any of the above claims, **characterized in that** the tilting ramp (2) adopt a stable upper position arranged in a vertical plane.

17. **CRANE VEHICLE,** according to any of the above claims, **characterized in that** the fixed platform (1) incorporates at least one pair of housings (25) concealable by means of respective covers (26), these housings (25) being intended for fitting part of one of the pairs of wheels of the vehicle raised on said fixed platform (1).

## Revendications

1. Véhicule-grue, pour transporter des véhicules, comprenant :
une plate-forme fixe (1) pour situer un premier véhicule dessus connectée à rotation à une rampe inclinable (2) ; ladite rampe inclinable (2) étant extensible, ladite rampe inclinable (2) comportant à cet effet un corps principal (7) et un second corps (8) ; et
un bras télescopique (11) étant connecté à une tête inclinable (20) couplée à rotation à la plate-forme fixe ; ladite tête inclinable (20) restant à niveau avec ladite plate-forme fixe (1) dans une position pliée ; le bras télescopique (11) comportant un support d'extrémité réglable (19) robuste où les roues avant d'un second véhicule viennent s'asseoir pour son transport par remorquage et qui repose sur le sol par l'intermédiaire de ses roues arrières ;
**caractérisé en ce que** ledit corps principal (7) et ledit second corps (8) de la rampe inclinable (2) ont des intervalles d'espacement se faisant face et centrés (14 et 15) dans la position pliée afin d'étendre la partie arrière de la tête inclinable (20) quand il existe un mouvement relatif entre la rampe inclinable (2) et ladite tête inclinable (20).

2. Véhicule-grue, selon la revendication 1, **caractérisé en ce que** la tête inclinable (20) est logée dans sa position pliée dans un espace longitudinal centré (31) flanqué par deux structures inférieures (32) avec lesquelles sont formées d'un seul bloc des surfaces latérales formant partie de la plate-forme fixe (1).

3. Véhicule-grue, selon la revendication 2, **caractérisé en ce que** les structures inférieures (32) sont faite pour être d'un seul bloc ensemble au moyen de supports intermédiaires (27) faits d'un acier à haute résistance agencés en correspondance avec l'espace longitudinal centré (31).

4. Véhicule-grue, selon la revendication 3, **caractérisé en ce que** les supports intermédiaires (27) forment le siège pour la tête inclinable (20) dans la position pliée.

5. Véhicule-grue, selon l'une quelconque des revendications 3 ou 4, **caractérisé en ce qu'**au moins un des supports intermédiaires (27) incorpore des moyens de guidage pour la tête (20) pendant son inclinaison finale vers la position pliée.

6. Véhicule-grue, selon la revendication 5, **caractérisé en ce que** les moyens de guidage pour la tête (20) pour l'inclinaison finale de celle-ci vers la position pliée consistent en certains corps latéraux en téflon (28).

7. Véhicule-grue, selon l'une quelconque des revendications précédentes, **caractérisé en ce que** la tête inclinable (20) est liée à un arbre avant agencé au-dessous de la surface de la plate-forme fixe (1).

8. Véhicule-grue, selon l'une quelconque des revendications précédentes, **caractérisé en ce que** l'inclinaison de la tête inclinable (20) est réalisée par une paire de vérins oléo-hydrauliques (23) couplés dans une zone intermédiaire correspondant à l'axe double des roues arrière du véhicule-grue, alors que les tiges sont connectées à des extensions latérales d'une plaque (24) d'un seul bloc avec la tête inclinable (20).

9. Véhicule-grue, selon la revendication 8, **caractérisé en ce que** les vérins oléo-hydrauliques (23) qui déplacent la tête inclinable (20) sont couplés à l'un des supports intermédiaires (27).

10. Véhicule-grue, selon l'une quelconque des revendications précédentes, **caractérisé en ce que** le bras télescopique (11) est couplé où il commence de manière jointe à un support centré (13) robuste d'un seul bloc avec la partie arrière de la tête inclinable (20) au-dessous d'une biellette de la rampe inclinable (2).

11. Véhicule-grue, selon l'une quelconque des revendications précédentes, **caractérisé en ce que** le corps principal (7) est couplé dans l'arbre de liaison transversale (3) et le second corps (8) peut être déplacé linéairement et couplé à des guides latéraux (9) du corps principal (7).

12. Véhicule-grue, selon la revendication 11, **caractérisé en ce que** l'inclinaison de la rampe inclinable (2) est réalisée au moyen de vérins oléo-hydrauliques (4) couplés dans des paires de pattes (5) d'un seul bloc avec le châssis de la grue et dont des tiges sont connectées dans une barre transversale (6) d'un seul bloc avec les côtés du corps principal (7) de la rampe inclinable (2).

13. Véhicule-grue, selon l'une quelconque des revendications 11 ou 12, **caractérisé en ce que** le corps (8) déplaçable linéairement de la rampe inclinable (2) et déplacé au moyen d'une paire de vérins oléo-hydrauliques (10) couplés à des zones latérales du corps principal (7) et dont des tiges sont connectées en d'autres points dudit corps (8) déplaçable linéairement.

14. Véhicule-grue, selon l'une quelconque des revendications 10 à 13, **caractérisé en ce que** l'inclinaison du bras télescopique (11) est réalisée par un vérin oléo-hydraulique court (16) couplé dans la partie arrière de la tête inclinable (20) au-dessous du support central (13) et ont la tige est connectée dans une partie initiale du bras télescopique (11).

15. Véhicule-grue, selon l'une quelconque des revendications précédentes, **caractérisé en ce que** le déplacement linéaire du bras télescopique (11) est réalisé au moyen d'un vérin oléo-hydraulique (17).

16. Véhicule-grue, selon l'une quelconque des revendications précédentes, **caractérisé en ce que** la rampe inclinable (2) adopte une position supérieure stable agencée dans un plan vertical.

17. Véhicule-grue, selon l'une quelconque des revendications précédentes, **caractérisé en ce que** la plate-forme fixe (1) incorpore au moins une paire de logements (25) pouvant être fermés au moyen de couvercles (26) respectifs, ces logements (25) étant prévus pour ajuster une partie de l'une des paires de roues du véhicule levé sur ladite plate-forme fixe (1).

## Patentansprüche

1. Kranfahrzeug zum Transportieren von Fahrzeugen, das umfasst:
eine feststehende Plattform (1) zum Positionieren eines ersten Fahrzeugs darauf, die drehbar mit einer Schwenkrampe (2) verbunden ist, wobei die Schwenkrampe (2) ausfahrbar ist und die Schwenkrampe (2) einen Hauptkörper (7) sowie einen zweiten Körper (8) hat; und
einen Teleskoparm (11), der mit einem Schwenkkopf (20) verbunden ist, der drehbar mit der feststehenden Plattform gekoppelt ist, wobei der Schwenkkopf (20) in einer eingeklappten Position bündig mit der feststehenden Plattform (1) bleibt, der Teleskoparm (11) einen stabilen Endträger (19) aufweist, auf dem die Vorderräder eines zweiten Fahrzeugs aufliegen, das mittels Schleppen transportiert wird und das über seine Hinterräder auf dem Boden aufsitzt;
**dadurch gekennzeichnet, dass** der Hauptkörper (7) und der zweite Körper (8) der Schwenkrampe (2) in der eingeklappten Position mittige und einander zugewandte freie Zwischenräume (14 und 15) aufweisen, die bei relativer Bewegung der Schwenkrampe (2) und des Schwenkkopfes (20) zueinander den hinteren Teil des Schwenkkopfes (20) überspannen.

2. Kranfahrzeug nach Anspruch 1, **dadurch gekennzeichnet, dass** der Schwenkkopf (20) in seiner eingeklappten Position in einem mittigen Längs-Raum (31) aufgenommen ist, der seitlich von zwei unteren Strukturen (32) umgeben ist, mit denen seitliche Flächen, die Teil der feststehenden Plattform (1) sind, integral ausgebildet sind.

3. Kranfahrzeug nach Anspruch 2, **dadurch gekennzeichnet, dass** die unteren Strukturen (32) über Zwischen-Träger (27) integral miteinander ausgebildet sind, die aus hochwiderstandsfähigem Stahl bestehen und entsprechend dem mittigen Längs-Raum (31) angeordnet sind.

4. Kranfahrzeug nach Anspruch 3, **dadurch gekennzeichnet, dass** die Zwischen-Träger (27) die Auflage für den Schwenkkopf (20) in seiner eingeklappten Position bilden.

5. Kranfahrzeug nach einem der Ansprüche 3 oder 4, **dadurch gekennzeichnet, dass** wenigstens einer der Zwischen-Träger (27) Führungseinrichtungen für den Kopf (20) während seines abschließenden Schwenkens auf die eingeklappte Position zu enthält.

6. Kranfahrzeug nach Anspruch 5, **dadurch gekennzeichnet, dass** die Führungseinrichtungen für den Kopf (20) für das abschließende Schwenken desselben auf die eingeklappte Position zu aus seitlichen Teflon-Körpern (28) bestehen.

7. Kranfahrzeug nach einem der obenstehenden Ansprüche, **dadurch gekennzeichnet, dass** der Schwenkkopf (20) mit einer vorderen Welle verbunden ist, die unterhalb der Oberfläche der feststehenden Plattform (1) angeordnet ist.

8. Kranfahrzeug nach einem der obenstehenden Ansprüche, **dadurch gekennzeichnet, dass** das Schwenken des Schwenkkopfes (20) mit einem Paar Öl-Hydraulikzylindern (23) ausgeführt wird, die in einer mittleren Zone gekoppelt sind, die der Doppelachse der Hinterräder des Kranfahrzeugs entspricht, wobei die Stangen mit seitlichen Verlängerungen einer Platte (24) verbunden sind, die integral mit dem Schwenkkopf (20) ausgebildet ist.

9. Kranfahrzeug nach Anspruch 8, **dadurch gekennzeichnet, dass** die Öl-Hydraulikzylinder (23), die den Schwenkkopf (20) bewegen, mit einem der Zwischen-Träger (27) gekoppelt sind.

10. Kranfahrzeug nach einem der obenstehenden Ansprüche, **dadurch gekennzeichnet, dass** der Teleskoparm (11) dort, wo sich sein Anfang in Verbindung mit einem stabilen MittelTräger (13) befindet, der integral mit dem hinteren Teil des Schwenkkopfes (20) ausgebildet ist, unterhalb eines Gelenks der Schwenkrampe (2) gekoppelt ist.

11. Kranfahrzeug nach einem der vorangehenden Ansprüche, **dadurch gekennzeichnet, dass** der Hauptkörper (7) an der Quer-Lenkwelle (3) gekoppelt ist und der zweite Körper (8) linear verschoben werden kann und mit seitlichen Führungen (9) des Hauptkörpers (7) gekoppelt ist.

12. Kranfahrzeug nach Anspruch 1, **dadurch gekennzeichnet, dass** das Schwenken der Schwenkrampe (2) mit Öl-Hydraulikzylindern (4) ausgeführt wird, die mit paarigen Haltern (5) gekoppelt sind, die integral mit dem Fahrgestell des Krans ausgebildet sind, und deren Stangen mit einer Querstrebe (6) verbunden sind, die integral mit den Seiten des Hauptkörpers (7) der Schwenkrampe (2) ausgebildet ist.

13. Kranfahrzeug nach einem der Ansprüche 11 oder 12, **dadurch gekennzeichnet, dass** der linear verschiebbare Körper (8) der Schwenkrampe (2) mittels eines Paars von Öl-Hydraulikzylindern (10) bewegt wird, die mit seitlichen Zonen des Hauptkörpers (7) gekoppelt sind und deren Stangen mit anderen Punkten des linear verschiebbaren Körpers (8) verbunden sind.

14. Kranfahrzeug nach einem der Ansprüche 10 bis 13, **dadurch gekennzeichnet, dass** das Schwenken des Teleskoparms (11) mittels eines kurzen Öl-Hydraulikzylinders (16) ausgeführt wird, der mit dem hinteren Teil des Schwenkkopfes (20) unterhalb des MittelTrägers (13) gekoppelt ist und dessen Stange mit einem Anfangsteil des Teleskoparms (11) verbunden ist.

15. Kranfahrzeug nach einem der obenstehenden Ansprüche, **dadurch gekennzeichnet, dass** die lineare Verschiebung des Teleskoparms (11) mittels eines Öl-Hydraulikzylinders (17) ausgeführt wird.

16. Kranfahrzeug nach einem der obenstehenden Ansprüche, **dadurch gekennzeichnet, dass** die Schwenkrampe (2) eine stabile obere Position hat, die in einer vertikalen Ebene liegt.

17. Kranfahrzeug nach einem der obenstehenden Ansprüche, **dadurch gekennzeichnet, dass** die feststehende Plattform (1) wenigstens ein Paar Gehäuse (25) enthält, die mittels entsprechender Abdeckungen (26) verdeckt werden können, wobei diese Gehäuse (25) zum Einsetzen eines Teils eines der Paare von Rädern des Fahrzeugs bestimmt sind, das auf die feststehende Plattform (1) gehoben wird.
